# EUROPEAN PATENT SPECIFICATION

(11) **EP 3 544 034 B1**
(45) Date of publication and mention of the grant of the patent: **27.09.2023**
(21) Application number: 16921505.0
(22) Date of filing: 15.11.2016
(51) Int. Cl.: H01F 38/14, H01F 27/02, H01F 27/22, H01F 27/36

(54) **NON-CONTACT POWER SUPPLY CONNECTION UNIT, NON-CONTACT POWER SUPPLY DEVICE, AND OPERATING MACHINE**
VERBINDUNGSEINHEIT FÜR EIN KONTAKTLOSES NETZTEIL, KONTAKTLOSES NETZTEIL UND ARBEITSMASCHINE
UNITÉ DE CONNEXION D'ALIMENTATION ÉLECTRIQUE SANS CONTACT, DISPOSITIF D'ALIMENTATION ÉLECTRIQUE SANS CONTACT ET MACHINE D'EXPLOITATION

(43) Date of publication of application: 25.09.2019
(73) Proprietor: FUJI Corporation, Chiryu Aichi (JP)
(72) Inventor: OKI, Masayuki, Chiryu-shi Aichi 472-8686 (JP); KATO, Shinichi, Chiryu-shi Aichi 472-8686 (JP); NOMURA, Takeshi, Chiryu-shi Aichi 472-8686 (JP)
(74) Representative: Grünecker Patent- und Rechtsanwälte PartG mbB
(86) International application number: PCT/JP2016/083843
(87) International publication number: WO 2018/092192

(56) References cited:
- EP-A1- 2 916 332
- JP-A- 2009 135 344
- JP-A- 2010 517 309
- JP-A- 2012 204 469
- US-A- 6 049 191
- US-A1- 2006 209 487
- US-A1- 2012 091 818

## Description

### Technical Field

The present invention relates to a non-contact power supply connection unit, in which a power supply-side inductor and a power receiving-side inductor are disposed to face each other to supply power in a non-contact manner, a non-contact power supply device configured to use the non-contact power supply connection unit, and an operating machine comprising the non-contact power supply device.

### Background Art

A non-contact power supply device for supplying power from a fixed section to a movable section in a non-contact manner has been developed. The non-contact power supply device is used in an operating machine or the like which has a movable section and performs a predetermined operation. Examples of an operating machine include a board production machine, for producing a board on which electronic components are mounted, and various types of machine tools. In a non-contact power supply device of an electromagnetic induction system, a power supply-side inductor and a power receiving-side inductor are used in a non-contact power supply connection unit. The two inductors, when disposed to face each other, form a magnetic loop including a magnetic gap, thereby enabling supply of power in a non-contact manner. In this configuration, since there are concerns regarding the effect of magnetic flux leaking from the magnetic loop, various magnetic shielding techniques have been proposed.

For example, Patent Literature 1 discloses a power supply section and a power receiving section for supplying power in a non-contact manner. The power supply section has a power source, a power supply-side resonance inductor, a conductive shield case for accommodating the power supply-side resonance inductor, and magnetic material disposed outside the shield case. The power receiving section has a power receiving-side resonance inductor, a conductive shield case for accommodating the power receiving-side resonance inductor, and magnetic material disposed outside the shield case. According to the description of the embodiment of Patent Document 1, ferrite (i.e., magnetic substance) forms a flat plate shape and is disposed adjacent to the power receiving-side conductive shield case. As a result, the magnetic field generated by the power supply-side resonance inductor and leaked from the shield case is absorbed by the magnetic material, sufficiently preventing electromagnetic leakage.

Further, in Patent Literature 2, the installation positions of the magnetic material disclosed in Patent Literature 1 are limited. That is, in the power supply section and the power receiving section, the shield case is composed of a bottom wall and a vertical wall covering the inductor, and magnetic material is provided on the vertical wall surface of the shield case. Further, a mode in which magnetic material is provided on the outer surface or the bottom wall of the shield case is also disclosed.

Patent Literature 3 discloses a toroidal, shielded non-contact power coupling device, wherein toroidal windings on the power supply side are parallel to and oppose toroidal windings on the power receiving side and the opposing toroidal windings are rotatable with respect to each other. The windings are embedded in toroidal cores, which may have an E-shape in cross section. Toroidal half-shields comprising electrically conductive material such as aluminum cover the power supply-side and the power receiving side cores, respectively. The gap between the half-shields may be displaced with respect to the gap between the respective cores.

### Patent Literature

Patent Literature 1: JP-A-2014-176133
Patent Literature 2: JP-A-2014-113021
Patent Literature 3: EP 2 916 332 A1

### Summary of the Invention

### Technical Problem

In Patent Literature 1, the position of the ferrite is not necessarily appropriate, and it is possible for a nearby iron structural member to generate heat due to magnetic flux leakage. Therefore, the fixed section and the movable section need to be large in order to secure a certain distance between inductors and iron structural members therein. Further, equipment costs increase because magnetic materials such as ferrites are expensive and a complex dual structure is formed by disposing the shield case and magnetic material in an overlapping manner. Furthermore, this dual structure may hinder heat dissipation of the inductor.

The present invention has been made in view of the above-mentioned problems of the background art, and it is an object of the present invention to provide a non-contact power supply connection unit in which magnetic flux leakage is suppressed without using magnetic material for a magnetic shield, a non-contact power supply device configured to use the non-contact power supply connection unit, and an operating machine including the non-contact power supply device. Solution to Problem

The non-contact power supply connection unit in accordance with the present invention is defined in clam 1. The non-contact power supply connection unit comprises: a power supply-side core, a power supply-side inductor having a power supply-side coil wound around the power supply-side core, a power receiving-side core, a power receiving-side inductor having a power receiving-side coil wound around the power receiving-side core, a power supply-side bracket section made of non-ferromagnetic metal material with covering at least a portion of the outer surface of the power supply-side core, a power receiving-side bracket section made of non-ferromagnetic metal material with covering at least a portion of the outer surface of the power receiving-side core; and a gap-covering section, being integrally formed with the power supply-side bracket section or the power receiving-side bracket section using the non-ferromagnetic metal material, which covers an outer portion of a magnetic gap that is a part of a magnetic loop formed with the power supply-side core and the power receiving-side core disposed to face each other.

A non-contact power supply device disclosed in this specification uses the non-contact power supply connection unit disclosed in this specification, and has the power supply-side inductor disposed in a fixed section, a power supply section for supplying electrical power to the power supply-side inductor, the power receiving-side inductor, disposed in a movable section moving relative to the fixed section, configured to receive electrical power from the power supply-side inductor in a non-contact manner, and a power receiving circuit for generating a driving voltage from power received by the power receiving-side inductor and supplying the driving voltage to an electrical load in the movable section.

The operating machine disclosed in this specification includes the non-contact power supply device disclosed in this specification.

### Advantageous Effect of the Invention

In the non-contact power supply connection unit disclosed in this specification, the gap-covering section made of non-ferromagnetic metal material covers an outer portion of the magnetic gap which is part of the magnetic loop. Since the power supply-side bracket section, the power receiving-side bracket section, and the gap-covering section are electrically conductive despite not being ferromagnetic, eddy currents are generated by the passage of magnetic flux. For this reason, the magnetic flux is directed through the power supply-side bracket section, the power receiving-side bracket section, and the gap-covering section relatively easily compared with resin, air, or the like which are neither ferromagnetic nor electrically conductive. Therefore, the gap-covering section covering the outer portion of the magnetic gap suppresses leakage to the outside of the device by directing much of the magnetic flux leaking from the magnetic gap. As a result, the non-contact power supply connection unit suppresses leakage of magnetic flux coming out of the device without using magnetic material for the magnetic shield.

Further, since the non-contact power supply device disclosed in this specification uses the non-contact power supply connection unit disclosed in this specification, it is possible to suppress leakage of magnetic flux coming out of the device.

Further, since the operating machine disclosed in this specification includes the non-contact power supply device disclosed in this specification and uses the non-contact power supply connection unit disclosed in this specification, leakage of magnetic flux inside and outside the operating machine can be suppressed.

### Brief Description of Drawings

[Fig. 1] A diagram schematically illustrating a configuration of a non-contact power supply device according to an embodiment.
[Fig. 2] A front partial cross-sectional view of the non-contact power supply connection unit of the embodiment as viewed from the front in the moving direction of the movable section.
[Fig. 3] A plan view of a power supply-side inductor as viewed from the inside.
[Fig. 4] A plan view of a power receiving-side inductor as viewed from the inside.
[Fig. 5] A front view illustrating an analytical model simulating a non-contact power supply connection unit of the embodiment.
[Fig. 6] A front view illustrating an analytical model simulating a non-contact power supply connection unit of a comparative example.
[Fig. 7] A partially enlarged view of a magnetic field distribution showing the results of a magnetic field analysis of the embodiment.
[Fig. 8] A partially enlarged view of a magnetic field distribution showing the results of a magnetic field analysis of a comparative example.

### (1. Configuration of non-contact power supply device 1 of the embodiment)

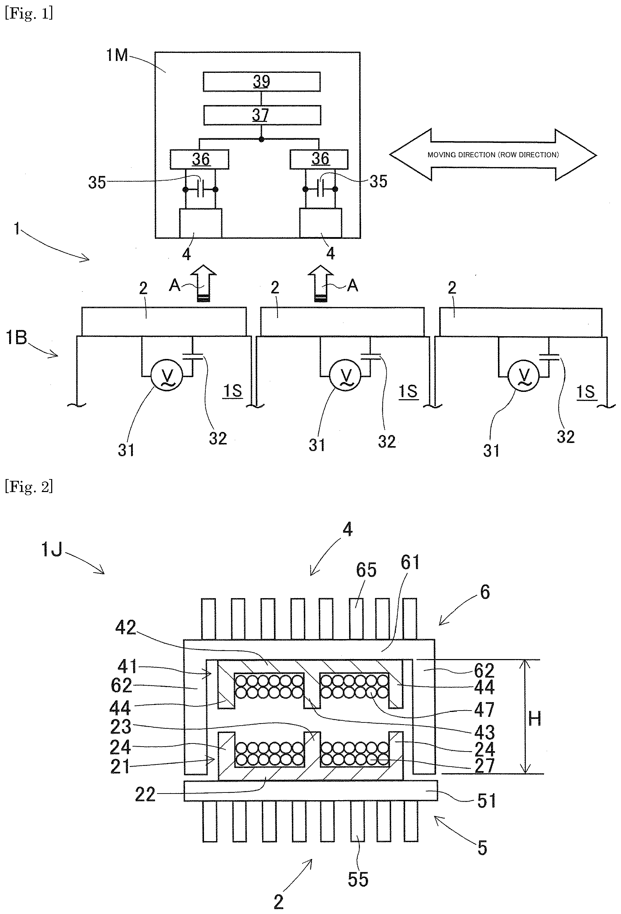

First, non-contact power supply device 1 of the embodiment will be described with reference to Fig. 1. Fig. 1 is a diagram schematically illustrating a configuration of non-contact power supply device 1 of the embodiment. Non-contact power supply device 1 of the embodiment is provided in the operating machine of the embodiment having fixed section 1B and movable section 1M. The operating machine of the embodiment can be an electronic component mounting machine, a solder printing machine, and a board inspection machine for producing a board on which an electronic component is mounted, and various types of machine tools having applications other than that of producing a board. Non-contact power supply device 1 of the embodiment supplies non-contact power from fixed section 1B to electrical load 39 on movable section 1M. Three sets of non-contact power supply sections 1S are arranged in a row in fixed section 1B. The row direction of the non-contact power supply sections 1S coincides with the moving direction of movable section 1M.

Each of the three sets of non-contact power supply sections 1S includes power supply 31, power supply-side inductor 2, and power supply-side resonant capacitor 32. Power supply 31 supplies power to power supply-side inductor 2. The three power supplies 31 can operate independently of each other. Power supply 31 can be an AC power supply, a high-frequency power supply, a pulse power supply, a DC pulsating power supply, or the like. In the present embodiment, power supply 31 is an AC power source. The AC power supply is configured by using, for example, a DC power supply unit that outputs a DC voltage and a known bridge circuit that converts the DC voltage into AC voltage. Power supply 31 is connected in series with power supply-side inductor 2 and power supply-side resonance capacitor 32. Power supply-side resonance capacitor 32 is connected in series with power supply-side inductor 2 to form a power supply-side resonance circuit.

Movable section 1M is composed of two power receiving-side inductors 4, two power receiving-side resonant capacitors 35, two rectifier circuits 36, DC transformer circuit 37, and the like. Movable section 1M is provided with electric load 39. The two power receiving-side inductors 4 are disposed apart from each other in the moving direction. The two power receiving-side resonance capacitors 35 are connected in parallel to the power receiving-side inductors 4 to form a power receiving-side resonance circuit.

Each power receiving-side inductor 4 is connected to a rectifier circuit 36. rectifier circuit 36 is composed of, for example, a full-wave rectifier circuit, in which four rectifier diodes are bridge-connected, and a smoothing capacitor. The two rectifier circuits 36 are connected in parallel to the input side of DC transformer circuit 37. Rectifier circuit 36 converts the power received by power receiving-side inductor 4 into a DC voltage, and outputs the DC voltage to DC transformer circuit 37. DC transformer circuit 37 transforms the DC voltage having an uncertain voltage value outputted from rectifier circuit 36 into a driving voltage having a substantially constant voltage value, and outputs the driving voltage to electric load 39. Rectifier circuit 36 and DC transformer circuit 37 constitute a power receiving circuit.

As indicated by an outlined arrow A in Fig. 1, power receiving-side inductor 4 is electromagnetically coupled to the opposing power supply-side inductor 2 to receive electrical power. Depending on the position of movable section 1M, the two power receiving-side inductors 4 may face different power supply-side inductors 2 or the same power supply-side inductor 2. As will be described in detail below, power supply-side inductor 2 and power receiving-side inductor 4 constitute non-contact power supply connection unit 1J of the embodiment (see Fig. 2).

### (2. Configuration of non-contact power supply connection unit 1J of the embodiment)

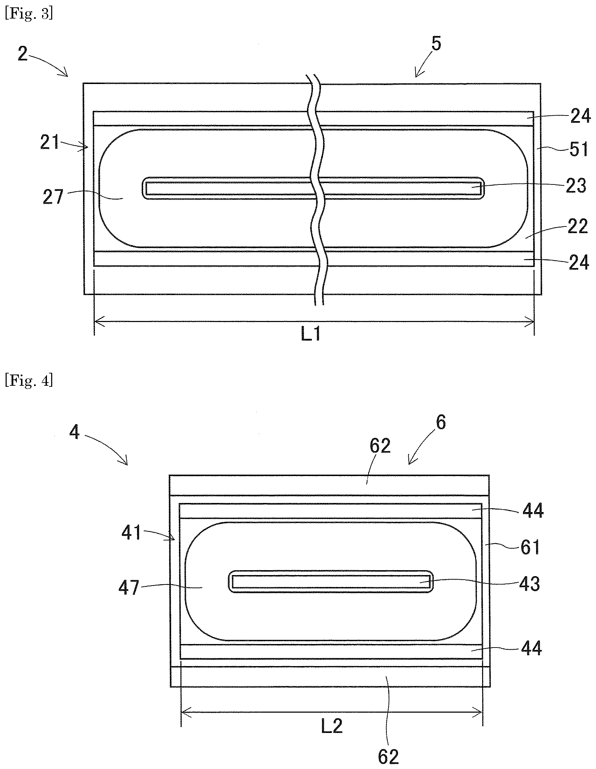

The description will now shift to non-contact power supply connection unit 1J of the embodiment. Fig. 2 is a front partial cross-sectional view of non-contact power supply connection unit 1J of the embodiment as viewed from the front of movable section 1M. In Fig. 2, the moving direction of movable section 1M is the front-back direction of the sheet. Non-contact power supply connection unit 1J is configured to be disposed so as to face each other so that power supply-side inductor 2 and power receiving-side inductor 4 are electromagnetically coupled to each other. Fig. 3 is a plan view of power supply-side inductor 2 as viewed from the inside. Fig. 4 is a plan view of power receiving-side inductor 4 as viewed from the inside.

As shown in Figs. 2 and 3, power supply-side inductor 2 includes power supply-side core 21 and power supply-side coil 27. Power supply-side core 21 is made of a magnetic material and is an E-type core with an E-shape in a front view. Power supply-side core 21 is composed of bottom section 22, middle-leg section 23, and two side-leg sections 24. Bottom section 22 has a rectangular plate-shape having length dimension L1 in the moving direction. The two side-leg sections 24 on which power supply-side coil 27 is not wound stand upright from the two long sides of bottom section 22 and are parallel to each other. Middle-leg section 23 around which the power supply-side coil 27 is wound stands upright from the center of bottom section 22. Middle-leg section 23 is shorter than side-leg section 24 and parallel to side-leg section 24.

Power supply-side coil 27 is formed by winding a coated electrical wire around middle-leg section 23. The coated electrical wire can be a copper wire or an aluminum wire with a circular cross section or a chamfered rectangular cross section and coated with an insulating resin or insulating paper. Fig. 2 shows an example in which a coated wire having a circular cross section is wound by 12 turns. The type of coated wire and the number of turns may differ from the examples described above.

Power supply-side bracket section 5 is attached to power supply-side inductor 2. Power supply-side bracket section 5 is made of non-ferromagnetic metal material. In the present embodiment, aluminum having good electrical and thermal conductivity and low specific gravity is selected as the metal material. Power supply-side bracket section 5 has bottom plate covering section 51 and multiple radiating fins 55. Bottom plate covering section 51 has a rectangular plate-shape in which the length dimension in the moving direction and the width dimension perpendicular to the moving direction are larger than those of power supply-side core 21. Bottom plate covering section 51 is disposed so as to be in contact with and cover the outer surface of bottom section 22 of power supply-side core 21.

Each of multiple radiator fins 55 has a thin plate shape. Multiple radiator fins 55 are erected on the outside of bottom plate covering section 51 and are parallel to each other. Power supply-side bracket section 5 is integrally formed by a manufacturing method such as casting or aluminum welding.

As shown in Figs. 2 and 4, power receiving-side inductor 4 includes a power receiving-side core 41 and power receiving-side coil 47. Power receiving-side core 41 is made of a magnetic material and is an E-type core with the same shape as power supply-side core 21 in a front view. Power receiving-side core 41 consists of bottom section 42, middle-leg section 43, and two side-leg sections 44. Bottom section 42 has a rectangular plate shape with length dimension L2 in the moving direction. Length dimension L2 of power receiving-side core 41 is as short as half of length dimension L1 or less of power supply-side core 21. The two side-leg sections 44 on which power receiving-side coil 47 is not wound stand upright from the two long sides of bottom section 42 and are parallel to each other. Middle-leg section 43 around which power receiving-side coil 47 is wound stands upright from the center of bottom section 42. Middle-leg section 43 is shorter than side-leg section 44 and parallel to side-leg section 44.

Power receiving-side coil 47 consists of a coated electrical wire wound around middle-leg section 43. In the present embodiment, power receiving-side coil 47 is formed by winding the same type of coated electrical wire as power supply-side coil 27 with the same number of turns.

Power receiving-side bracket section 6 is attached to power receiving-side inductor 4. Power receiving-side bracket section 6 is made of aluminum, selected for being a metal material having no ferromagnetism. Power receiving-side bracket section 6 has bottom plate covering section 61, two gap-covering sections 62, and multiple heat-dissipating fins 65. Bottom plate covering section 61 has a rectangular plate shape in which the length dimension in the moving direction and the width dimension, perpendicular to the moving direction, are larger than those of power receiving-side core 41. Bottom plate covering section 61 is disposed so as to be in contact with and cover the outer surface of bottom section 42 of power receiving-side core 41.

The two gap-covering sections 62 are integrally formed, using aluminum, with power receiving-side bracket section 6. More specifically, the two gap-covering sections 62 stand upright from the two long sides of bottom plate covering section 61 and are parallel to each other. Height H of gap-covering section 62 is set to be larger than twice the height of side-leg section 44 of power receiving-side core 41.

Each of multiple heat-dissipating fins 65 has a thin plate shape. Multiple heat-dissipating fins 65 are erected on the outside of bottom plate covering section 61, extend in the moving direction of movable section 1M, and are parallel to each other. Therefore, when movable section 1M moves, the surrounding air passes between multiple heat-dissipating fins 65, and a good heat-dissipating effect is produced. Power receiving-side bracket section 6 is integrally formed by a manufacturing method such as casting or aluminum welding.

In the facing arrangement of power supply-side inductor 2 and power receiving-side inductor 4 shown in Fig. 2, magnetic loops are respectively formed by power supply-side core 21 and power receiving-side core 41. Each magnetic loop has a magnetic gap between middle-leg section 23 and middle-leg section 43, and also has a magnetic gap between side-leg section 24 and side-leg section 44. In this arrangement, the magnetic gap between side-leg section 24 and side-leg section 44 is the point where magnetic flux is most likely to leak out of the device.

Gap-covering section 62 of power receiving-side bracket section 6 extends to the vicinity of power supply-side bracket section 5. As a result, gap-covering section 62 covers not only the outside of power receiving-side side-leg sections 44 but also the outside of power supply-side side-leg sections 24. Therefore, gap-covering section 62 also covers the outer portion of the magnetic gap formed between side-leg section 24 and side-leg section 44. However, gap-covering section 62 covers outer portions on both sides of the magnetic gap along the traveling direction of movable section 1M but does not cover the front and rear outer portions of the magnetic gap in the traveling direction of movable section 1M.

### (3. Action of non-contact power supply connection unit 1J of the embodiment)

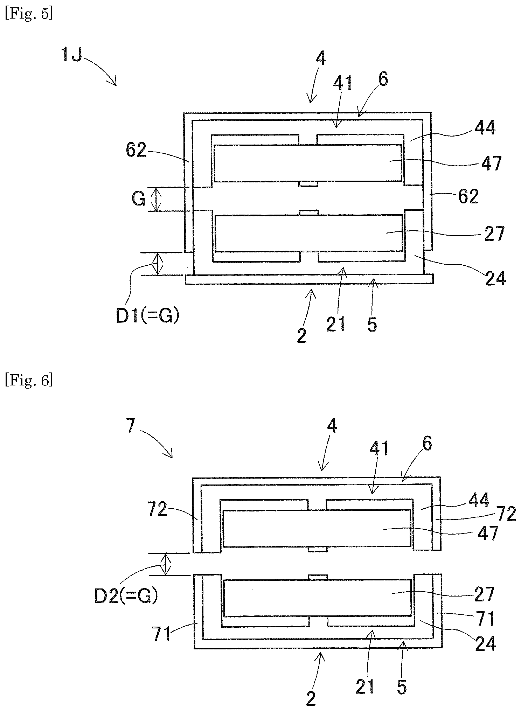

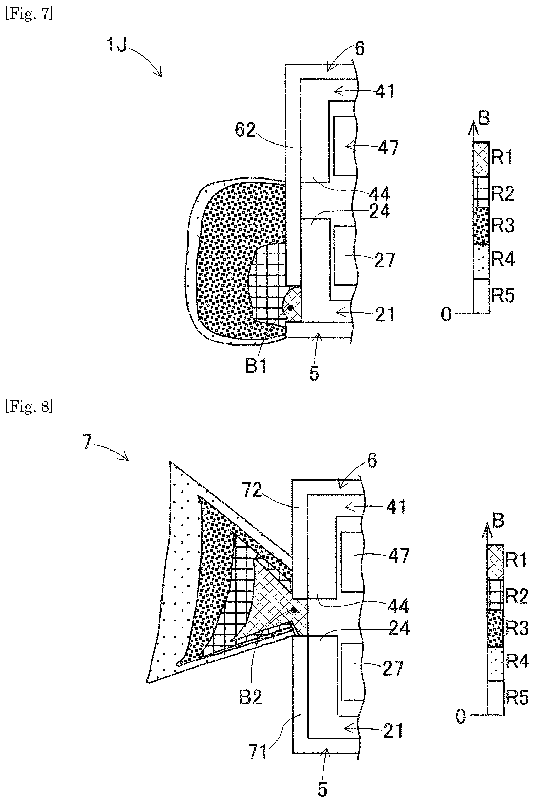

Next, the action of the magnetic shields of non-contact power supply connection unit 1J of the embodiment will be described with reference to the results of two cases in which magnetic field analysis was performed. Fig. 5 is a front view for describing an analytical model simulating non-contact power supply connection unit 1J of the embodiment. Fig. 6 is a front view for describing an analytical model simulating non-contact power supply connection unit 7 of a comparative example. Fig. 7 is a partial enlarged view of the magnetic field distribution showing the result of the magnetic field analysis of the embodiment. Fig. 8 is a partial enlarged view of the magnetic field distribution showing the result of the magnetic field analysis of the comparative example.

In the analytical model of the embodiment shown in Fig. 5, gap-covering section 62 of power receiving-side bracket section 6 has a shape in contact with the outer surfaces of side-leg section 44 and side-leg section 24. Separation distance D1 between gap-covering section 62 of power receiving-side bracket section 6 and power supply-side bracket section 5 is equal to magnetic gap length G.

In non-contact power supply connection unit 7 of the comparative example shown in Fig. 6, power supply-side core 21, power supply-side coil 27, power receiving-side core 41, and power receiving-side coil 47 have the same shape as in the embodiment. Side-leg covering section 71 of power supply-side bracket section 5 is in contact with the outer surface of power supply-side leg section 24, and side-leg covering section 72 of power receiving-side bracket section 6 is in contact with the outer surface of power receiving-side leg section 44. Separation distance D2 between side-leg covering section 71 and side-leg covering section 72 is equal to magnetic gap length G. That is, separation distance D2 of the comparative example is equal to separation distance D1 of the embodiment, and thus the analytical conditions of the two cases are aligned.

In the analytical model of the embodiment and the comparative example, heat-dissipating fins 55 and heat-dissipating fins 65 are omitted. The relative permeability of power supply-side bracket section 5 and power receiving-side bracket section 6 is set to 1.0, and an appropriate value is set for the electrical conductivity. Further, power supply-side inductor 2 and power receiving-side inductor 4 are disposed so that the centers thereof in the moving direction align with each other.

In Fig. 7 and Fig. 8, which show the results of the magnetic field analysis, the magnetic flux density B of the external space in the cross section at the center in the moving direction is shown stepwise. That is, first region R1, second region R2, third region R3, fourth region R4, and fifth region R5 (solid color) are shown with corresponding magnitudes of magnetic flux density B. The magnetic field analysis revealed the following:

First region R1 and second region R2, having a large magnetic flux density B, are small in the embodiment of Fig. 7 and large in the comparative example of Fig. 8. Also, the maximum magnetic flux density B1 at a point on the extension line of the outer surface of gap-covering section 62 in Fig. 7 is as small as about 60% of the maximum magnetic flux density B2 at a point between side-leg covering section 71 and side-leg covering section 72 in Fig. 8. Further, in the embodiment of Fig. 7, the magnetic flux density B in the external space in the vicinity of the magnetic gap has the magnitude of third region R3, which is remarkably small compared to magnitude of the comparative example. This means that gap-covering section 62 directs much of the magnetic flux leaking from the gap and does not leak the magnetic flux to the outside of the device. These results show that gap-covering section 62 of the embodiment has superior magnetic shielding effects in the direction perpendicular to the traveling direction of movable section 1M compared to the combination of side-leg covering section 71 and side-leg covering section 72 of the comparative example.

Next, heat dissipation of non-contact power supply connection unit 1J of the embodiment will be described. Since power supply-side coil 27 and power receiving-side coil 47 have the same number of turns, substantially the same amount of current flows through each of power supply-side coil 27 and power receiving-side coil 47. Further, since the type of coated electrical wire is the same in power supply-side coil 27 and power receiving-side coil 47, the load loss per unit volume is substantially the same. On the other hand, when comparing the magnetic path cross-sectional areas of power supply-side core 21 and power receiving-side core 41 that form the magnetic loop, the magnetic loop cross-sectional area of power receiving-side core 41 is smaller. Therefore, magnetic flux density B is small inside power supply-side core 21 and large inside power receiving-side core 41. Accordingly, the no-load loss per unit volume is small in power supply-side core 21 and large in power receiving-side core 41.

In this respect, compared to power supply-side coil 2, the temperature increase becomes significant in power receiving-side inductor 4 by the difference in no-load loss. As a countermeasure against this, gap-covering section 62 of power receiving-side bracket section 6 is extended so as to cover the outer portion of the magnetic gap. As a result, heat dissipation of power receiving-side bracket section 6 is improved by the extent to which the surface area is increased, and heat transmitted from power receiving-side core 41 in contact is efficiently dissipated. Thus, temperature increases of power supply-side inductor 2 and power receiving-side inductor 4 are equalized.

Further, power supply-side bracket section 5 is integrally formed with heat-dissipating fins 55 to improve heat dissipation, and power receiving-side bracket section 6 is also integrally formed with heat-dissipating fins 65 to improve heat dissipation. Further, power supply-side bracket section 5 and power receiving-side bracket section 6 are made of aluminum, which has good thermal conductivity. Power supply-side bracket section 5 is disposed in contact with power supply-side core 21, and power receiving-side bracket section 6 is disposed in contact with power receiving-side core 41. As a result, both power supply-side bracket section 5 and power receiving-side bracket section 6 have improved heat dissipation and good heat conductance, and can thereby efficiently dissipate heat. Therefore, temperature increases of power supply-side inductor 2 and power receiving-side inductor 4 are suppressed.

### (4. Conditions and effects of the embodiment)

The non-contact feed connection unit 1J includes the power supply-side bracket section 5 made of non-ferromagnetic metal material covering at least a portion of the outer surface of power supply-side core 21, and the power receiving-side bracket section 6 made of non-ferromagnetic metal material covering at least a portion of the outer surface of power receiving-side core 41. The gap-covering section 62, being formed integrally with power supply-side bracket section 5 or power receiving-side bracket section 6, is provided by the non-ferromagnetic metal material, covering an outer portion of a magnetic gap that is part of a magnetic loop formed by power supply-side core 21 and power receiving-side core 41 disposed to face each other.

The gap-covering section 62 made of non-ferromagnetic metal material covers the outer portion of the magnetic gap which is part of the magnetic loop. Since power supply-side bracket section 5, power receiving-side bracket section 6, and gap-covering section 62 have electrical conductivity despite not being ferromagnetic, eddy currents are generated by the passage of magnetic flux. For this reason, magnetic flux is conducted through power supply-side bracket section 5, power receiving-side bracket section 6, and gap-covering section 62 relatively easily compared to resin, air, or the like, which are not ferromagnetic or electrically conductive. Therefore, gap-covering section 62 covering the outer portion of the magnetic gap suppresses leakage to the outside of the device by conducting much of the magnetic flux leaking from the magnetic gap. As a result, the non-contact power supply connection unit of the embodiment suppresses leakage of magnetic flux coming out of the device without using magnetic material for the magnetic shield.

Further, the non-ferromagnetic metal material may be aluminum, and power supply-side bracket section 5, power receiving-side bracket section 6, and gap-covering section 62 are made of aluminum. As a result, since aluminum has good electrical conductivity and allows eddy currents to flow easily, much of the magnetic flux is easily conducted, and the magnetic shield effect becomes significant. Further, since aluminum has good thermal conductivity, it is advantageous in improving heat dissipation. Furthermore, since aluminum has a small specific gravity, it can help in reducing the weight of power supply-side inductor 2 and power receiving-side inductor 4.

Further, power supply-side core 21 is an E-type core having middle-leg section 23 on which power supply-side coil 27 is wound and two side-leg sections 24 on which power supply-side coil 27 is not wound, power receiving-side core 41 is an E-type core having middle-leg section 43 on which power receiving-side coil 47 is wound and two side-leg sections 44 on which power receiving-side coil 47 is not wound, and gap-covering section 62 covers the outer portion of a magnetic gap formed between side-leg section 24 and side-leg section 44. As a result, since the portion where magnetic flux is most likely to leak to the outside of the device is covered, the magnetic shielding effect becomes even more significant.

Further, from among power supply-side inductor 2 and power receiving-side inductor 4, gap-covering section 62 is formed on power receiving-side bracket section 6 of power receiving-side inductor 4, the side in which the temperature increase is significant. With this, heat dissipation of power receiving-side bracket section 6 on the side where the temperature increase becomes significant is improved by the extent to which the surface area is increased. Thus, temperature increases of power supply-side inductor 2 and power receiving-side inductor 4 are equalized.

Further, gap-covering section 62 is formed on the power receiving-side bracket section 6 on the side of power receiving-side core 41, which is the side among power supply-side core 21 and power receiving-side core 41 in which the cross-sectional area of the magnetic loop is smaller. With this, the magnetic flux density B of power receiving-side core 41 becomes large, and the temperature increase due to the no-load loss becomes significant. In accordance with this, heat dissipation of power receiving-side bracket section 6 is improved by the extent to which the surface area is increased. Thus, temperature increases of power supply-side inductor 2 and power receiving-side inductor 4 are equalized.

Further, power supply-side bracket section 5 is integrally formed with heat-dissipating fins 55, and power receiving-side bracket section 6 is also integrally formed with heat-dissipating fins 65. Accordingly, heat dissipation of both power supply-side bracket section 5 and power receiving-side bracket section 6 is improved. Therefore, temperature increases of power supply-side inductor 2 and power receiving-side inductor 4 are suppressed.

Non-contact power supply device 1 of the embodiment uses non-contact power supply connection unit 1J of the embodiment, and is provided with power supply-side inductor 2 disposed in fixed section 1B; power supply section 31 for supplying electrical power to power supply-side inductor 2; power receiving-side inductor 4, disposed in movable section 1M moving relative to fixed section 1B, configured to receive electrical power from power supply-side inductor 2 in a non-contact manner; and power receiving circuit (rectifier circuit 36 and DC transformer circuit 37) for generating a driving voltage from power received by the power receiving-side inductor 4 and supplying the driving voltage to electric load 39 in movable section 1M.

Since non-contact power supply device 1 of the embodiment uses non-contact power supply connection unit 1J of the embodiment, it is possible to suppress leakage of magnetic flux from the device.

Further, gap-covering section 62 covers the outer portion of the magnetic gap along a traveling direction of movable section 1M. With this, non-contact power supply device 1 has excellent magnetic shielding effects in the direction perpendicular to the traveling direction of movable section 1M and can suppress magnetic flux leakage.

Further, since the operating machine of the embodiment includes non-contact power supply device 1 of the embodiment and uses non-contact power supply connection unit 1J of the embodiment, it is possible to suppress leakage of magnetic flux inside and outside of the operating machine.

### (5. Applications and modifications of the embodiment)

The magnetic shielding effect can be further enhanced by reducing separation distance D1 between gap-covering section 62 of power receiving-side bracket section 6 and power supply-side bracket section 5. For example, gap-covering section 62 of power receiving-side bracket section 6 may extend within the range of separation distance D1. Further, both edges of power supply-side bracket section 5 in the width direction may be raised and disposed close to the outside of gap-covering section 62. Further, the shapes of power supply-side inductor 2 and power receiving-side inductor 4 can be appropriately changed. For example, power supply-side core 21 and power receiving-side core 41 may be C-type cores instead of E-type cores. Further, heat-dissipating fins 55 and heat-dissipating fins 65 are not indispensable, and can be discarded in accordance with the rate of heat-dissipation. That is, either one of heat-dissipating fins 55 or heat-dissipating fins 65 may be provided, or both may not be provided. Various other applications and modifications of the present invention are possible.

### Reference Signs List

1: non-contact power supply device 1B: fixed section 1M: movable section 1J: non-contact power supply connection unit 2: power supply-side inductor 21: power supply-side core 23: middle-leg section 24: side-leg section 27: power supply-side coil 31: power source 36: rectifier circuit 37: DC transformer circuit 4: power receiving-side inductor 41: power receiving-side core 43: middle-leg section 44: side-leg section 47: power receiving-side coil 5: power supply-side bracket section 51: bottom plate covering section 55: heat-dissipating fin 6: power receiving-side bracket section 61: bottom plate covering section 62: gap-covering section 65: heat-dissipating fin 7: non-contact power supply connection unit of a comparative example 71: side-leg covering section 72: side-leg covering section

## Claims

1. A non-contact power supply connection unit (1J), comprising: a fixed section (1B) for power supply and a movable section (1M) for power receiving;
the fixed section (1B) comprising: an E-type power supply-side core (21), including a bottom section (22), two side-leg sections (24) and a middle-leg section (23);
a power supply-side inductor (2), including a power supply-side coil (27) wound around the middle-leg section (23) of the power supply-side core (21);
the movable section (1M) comprising: an E-type power receiving-side core (41), including a bottom section (42), two side-leg sections (44) and a middle-leg section (43);
a power receiving-side inductor (4), including a power receiving-side coil (47) wound around the middle-leg section (43) of the power receiving side core (41); whereby the bottom section (22) of the power supply-side core (21) has a rectangular plate shape having length dimension (L1) in a direction wherein the side-leg sections (24) and the middle-leg section (23) extend,
the bottom section (42) of the power receiving-side core (41) has a rectangular plate shape having length dimension (L2) in a direction wherein the side-leg sections (44) and the middle-leg section (43) extend,
the power receiving-side core (41) and the power supply-side core (21) are configured so that the power receiving-side core (41) is movable in a direction parallel to the side-leg sections (44) and the middle-leg section (43) of the power receiving-side core (41) and the side-legs sections (24) and the middle-leg section (23) of the power supply-side core (21), and
the length dimension (L2) of the bottom section (42) of the power receiving-side core (41) is as short as half of the length dimension (L1) or less of the bottom section (22) of the power supply-side core (21);
the fixed section (1B) further comprising:
a power supply-side bracket section (5), being made of non-ferromagnetic metal material, which covers at least the outer surface of the bottom section (22) of the power supply-side core; and the movable section (1M) further comprising
a power receiving-side bracket section (6), being made of non-ferromagnetic metal material, which covers at least the outer surface of the bottom section (42) of the power receiving-side core (41); and
a gap-covering section (62), being integrally formed with the power supply-side bracket section (5) or the power receiving-side bracket section (6) provided by the non-ferromagnetic metal material, which covers an outer portion of a magnetic gap that is a part of a magnetic loop formed with the power supply-side core (21) and the power receiving-side core (41) disposed to face each other,
wherein the gap-covering section (62) extends to the vicinity of power supply-side bracket section (5).

2. The non-contact power supply connection unit of claim 1, wherein the non-ferromagnetic is aluminum.

3. The non-contact power supply connection of claim 1 or 2,
wherein the gap-covering section (62) covers an outer portion of the magnetic gap formed between the side-leg sections (24, 44).

4. The non-contact power supply connection unit of any one of claims 1 to 3,
wherein at least one of the power supply-side bracket section (5) and the power receiving-side bracket section (6) is integrally formed with heat-dissipating fins (55, 65).

5. A non-contact power supply device (1), comprising the non-contact power supply connection unit (1J) of any one of claims 1 to 4, comprising:
a power source (31) for supplying electrical power to the power supply-side inductor (2), and
a power receiving circuit (36, 37) for generating a driving voltage from electrical power received by the power receiving-side inductor (4) and supplying the driving voltage to an electrical load (39) in the movable section (1M).

6. The non-contact power supply device of claim 5, wherein the gap-covering section (62) covers the outer portion of the magnetic gap extending along the direction of movement of the movable section (1M).

7. An operating machine, comprising the non-contact power supply device (1) of claim 5 or 6.

## Patentansprüche

1. Verbindungseinheit (1J) für ein kontaktloses Netzteil, umfassend:
einen stationären Abschnitt (1B) zur Leistungszufuhr und einen beweglichen Abschnitt (1M) zur Leistungsaufnahme;
wobei der stationären Abschnitt (1B) umfasst:
einen leistungszufuhrseitigen Kern (21) vom E-Typ, der einen unteren Abschnitt (22), zwei Seitenschenkelabschnitte (24) und einen Mittelschenkelabschnitt (23) umfasst;
einen leistungszufuhrseitigen Induktor (2), der eine leistungszufuhrseitige Spule (27) umfasst, die um den Mittelschenkelabschnitt (23) des leistungszufuhrseitigen Kerns (21) gewickelt ist;
wobei der bewegliche Abschnitt (1M) umfasst:
einen leistungsaufnahmeseitigen Kern (41) vom E-Typ, der einen unteren Abschnitt (42), zwei Seitenschenkelabschnitte (44) und einen Mittelschenkelabschnitt (43) umfasst;
einen leistungsaufnahmeseitigen Induktor (4), der eine leistungsaufnahmeseitigen Spule (47) umfasst, die um den Mittelschenkelabschnitt (43) des leistungsaufnahmeseitigen Kerns (41) gewickelt ist; wobei
der untere Abschnitt (22) des leistungszufuhrseitigen Kerns (21) eine rechteckige Plattenform aufweist mit einer Längenabmessung (L1) in einer Richtung, in der sich die Seitenschenkelabschnitte (24) und der Mittelschenkelabschnitt (23) erstrecken,
der untere Abschnitt (42) des leistungsaufnahmeseitigen Kerns (41) eine rechteckige Plattenform aufweist mit einer Längenabmessung (L2) in einer Richtung, in der sich die Seitenschenkelabschnitte (44) und der Mittelschenkelabschnitt (43) erstrecken,
der leistungsaufnahmeseitige Kern (41) und der leistungszufuhrseitige Kern (21) so konfiguriert sind, dass der leistungsaufnahmeseitige Kern (41) in einer Richtung parallel zu den Seitenschenkelabschnitten (44) und dem Mittelschenkelabschnitt (43) des leistungsaufnahmeseitigen Kerns (41) und den Seitenschenkelabschnitten (24) und dem Mittelschenkelabschnitt (23) des leistungszufuhrseitigen Kerns (21) beweglich ist, und
die Längenabmessung (L2) des unteren Abschnitts (42) des leistungsaufnahmeseitigen Kerns (41) so kurz ist wie die Hälfte der Längenabmessung (L1) des unteren Abschnitts (22) des leistungszufuhrseitigen Kerns (21) oder weniger;
wobei der stationäre Abschnitt (1B) weiterhin umfasst:
einen leistungszufuhrseitigen Halterungsabschnitt (5), der aus nicht ferromagnetischem Metallmaterial besteht und mindestens die Außenfläche des unteren Abschnitts (22) des leistungszufuhrseitigen Kerns (21) abdeckt; und
wobei der bewegliche Abschnitt (1M) weiterhin umfasst:
einen leistungsaufnahmeseitigen Halterungsabschnitt (6), der aus nicht ferromagnetischem Metallmaterial besteht und mindestens die Außenfläche des unteren Abschnitts (42) des leistungsaufnahmeseitigen Kerns (41) abdeckt; und
einen Spaltabdeckungsabschnitt (62), der einstückig mit dem leistungszufuhrseitigen Halterungsabschnitt (5) oder dem leistungsaufnahmeseitigen Halterungsabschnitt (6) aus dem nichtferromagnetischen Metallmaterial ausgebildet ist und einen äußeren Abschnitt eines Magnetspalts abdeckt, der Teil einer Magnetschleife ist, die mit dem leistungszufuhrseitigen Kern (21) und dem leistungsaufnahmeseitigen Kern (41) gebildet wird, die einander gegenüberliegend angeordnet sind,
wobei sich der Spaltabdeckungsabschnitt (62) bis in die Nähe des leistungszufuhrseitigen Halterungsabschnitts (5) erstreckt.

2. Verbindungseinheit (1J) für ein kontaktloses Netzteil nach Anspruch 1, wobei das nicht ferromagnetische Material Aluminium ist.

3. Verbindungseinheit (1J) für ein kontaktloses Netzteil nach Anspruch 1 oder 2,
wobei der Spaltabdeckungsabschnitt (62) einen äußeren Abschnitt des zwischen den Seitenschenkelabschnitten (24, 44) gebildeten Magnetspalts abdeckt.

4. Verbindungseinheit (1J) für ein kontaktloses Netzteil nach einem der Ansprüche 1 bis 3,
wobei mindestens einer von dem leistungszufuhrseitigen Halterungsabschnitt (5) und dem leistungsaufnahmeseitigen Halterungsabschnitt (6) einstückig mit wärmeableitenden Rippen (55, 65) ausgebildet ist.

5. Kontaktloses Netzteil (1), umfassend die Verbindungseinheit (1J) für ein kontaktloses Netzteil nach einem der Ansprüche 1 bis 4, umfassend:
eine Stromquelle (31) zur Versorgung des leistungszufuhrseitigen Induktors (2) mit elektrischer Energie, und
eine Leistungsaufnahmeschaltung (36, 37) zum Erzeugen einer Antriebsspannung aus elektrischer Energie, die von dem leistungsaufnahmeseitigen Induktor (4) empfangen wird, und zum Zuführen der Antriebsspannung zu einer elektrischen Last (39) im beweglichen Abschnitt (1M).

6. Kontaktloses Netzteil (1) nach Anspruch 5, wobei der Spaltabdeckungsabschnitt (62) den äußeren Abschnitt des Magnetspalts abdeckt, der sich entlang der Bewegungsrichtung des beweglichen Abschnitts (1M) erstreckt.

7. Arbeitsmaschine, das Kontaktlose Netzteil (1) nach Anspruch 5 oder 6 umfassend.

## Revendications

1. Unité de connexion d'alimentation électrique sans contact (1J), comprenant : une section fixe (1B) pour l'alimentation électrique et une section mobile (1M) pour la réception de l'alimentation ;
la section fixe (1B) comprenant : un noyau côté alimentation (21) de type E, incluant une section inférieure (22), deux sections latérales (24) et une section centrale (23) ;
un inducteur côté alimentation (2), incluant une bobine côté alimentation (27) enroulée autour de la section centrale (23) du noyau côté alimentation (21) ;
la section mobile (1M) comprenant : un noyau côté réception de puissance (41) de type E, incluant une section inférieure (42), deux sections latérales (44) et une section centrale (43) ;
un inducteur côté réception de puissance (4), incluant une bobine côté réception de puissance (47) enroulée autour de la section centrale (43) du noyau côté réception de puissance (41) ; grâce à quoi
la section inférieure (22) du noyau côté alimentation (21) a une forme de plaque rectangulaire ayant une dimension de longueur (L1) dans une direction où s'étendent les sections latérales (24) et la section centrale (23),
la section inférieure (42) du noyau côté réception de puissance (41) a une forme de plaque rectangulaire ayant une dimension de longueur (L2) dans une direction où s'étendent les sections latérales (44) et la section centrale (43),
le noyau côté réception de puissance (41) et le noyau côté alimentation (21) sont configurés de telle sorte que le noyau côté réception de puissance (41) est mobile dans une direction parallèle aux sections latérales (44) et à la section centrale (43) du noyau côté réception de puissance (41) et aux sections latérales (24) et à la section centrale (23) du noyau côté alimentation (21), et
la dimension de la longueur (L2) de la section inférieure (42) du noyau côté réception de puissance (41) est aussi courte que la moitié de la dimension de la longueur (L1) ou moins de la section inférieure (22) du noyau côté alimentation (21) ;
la section fixe (1B) comprenant en outre :
une section de support côté alimentation (5), faite d'un matériau métallique non ferromagnétique, qui couvre au moins la surface extérieure de la section inférieure (22) du noyau côté alimentation ; et la section mobile (1M) comprenant en outre une section de support côté réception (6), faite d'un matériau métallique non ferromagnétique, qui couvre au moins la surface extérieure de la section inférieure (42) du noyau côté réception de puissance (41) ; et
une section de recouvrement d'entrefer (62), formée intégralement avec la section de support côté alimentation (5) ou la section de support côté réception (6) fournie par le matériau métallique non ferromagnétique, qui couvre une partie extérieure d'un entrefer magnétique faisant partie d'une boucle magnétique formée avec le noyau côté alimentation (21) et le noyau côté réception de puissance (41) disposés l'un en face de l'autre,
dans lequel la section de recouvrement d'entrefer (62) s'étend jusqu'à proximité de la section de support côté alimentation (5).

2. Unité de connexion d'alimentation électrique sans contact selon la revendication 1, dans laquelle le matériau non ferromagnétique est de l'aluminium.

3. Connexion d'alimentation électrique sans contact selon la revendication 1 ou 2,
dans laquelle la section de recouvrement d'entrefer (62) couvre une partie extérieure de l'entrefer magnétique formé entre les sections latérales (24, 44).

4. Unité de connexion d'alimentation électrique sans contact selon l'une quelconque des revendications 1 à 3,
dans laquelle au moins l'une de la section de support côté alimentation (5) et de la section de support côté réception (6) est intégralement formée avec des ailettes de dissipation thermique (55, 65).

5. Dispositif d'alimentation électrique sans contact (1), comprenant l'unité de connexion d'alimentation électrique sans contact (1J) selon l'une quelconque des revendications 1 à 4, comprenant :
une source d'alimentation (31) pour fournir de l'énergie électrique à l'inducteur côté alimentation (2), et
un circuit de réception de puissance (36, 37) pour générer une tension de commande à partir de la puissance électrique reçue par l'inducteur côté réception de puissance (4) et fournir la tension de commande à une charge électrique (39) dans la section mobile (1M).

6. Dispositif d'alimentation électrique sans contact selon la revendication 5, dans lequel la section de recouvrement d'entrefer (62) couvre la partie extérieure de l'écart magnétique s'étendant le long de la direction de déplacement de la section mobile (1M).

7. Machine d'exploitation comprenant le dispositif d'alimentation électrique sans contact (1) selon la revendication 5 ou 6.
